Europäisches Patentamt

European Patent Office

Office européen des brevets

(11) Veröffentlichungsnummer: **0 267 248 B1**

# (12) EUROPÄISCHE PATENTSCHRIFT

(45) Veröffentlichungstag der Patentschrift :
09.10.91 Patentblatt 91/41

(51) Int. Cl.⁵: **B23Q 11/08, F16J 15/32**

(21) Anmeldenummer : 87903300.9

(22) Anmeldetag : 13.05.87

(86) Internationale Anmeldenummer :
PCT/EP87/00250

(87) Internationale Veröffentlichungsnummer :
WO 87/06866 19.11.87 Gazette 87/25

(54) **ABSTREIFEINRICHTUNG FÜR TELESKOP-STAHLABDECKUNGEN.**

(30) Priorität : 13.05.86 DE 8613005 U

(43) Veröffentlichungstag der Anmeldung :
18.05.88 Patentblatt 88/20

(45) Bekanntmachung des Hinweises auf die
Patenterteilung :
09.10.91 Patentblatt 91/41

(84) Benannte Vertragsstaaten :
DE FR GB IT

(56) Entgegenhaltungen :
DD-A- 135 462
DE-A- 1 803 448
DE-A- 2 937 307

(56) Entgegenhaltungen :
GB-A- 545 437
GB-A- 2 094 677
US-A- 2 834 616
US-A- 3 159 182
US-A- 3 603 651

(73) Patentinhaber : Gebr. Hennig GmbH
Dorfstrasse 41
W-8045 Ismaning (DE)

(72) Erfinder : STÖHR, Albert
Am Wiegenberg 8
W-8015 Markt Schwaben (DE)

(74) Vertreter : Tetzner, Volkmar, Dr.-Ing. Dr. jur.
Van-Gogh-Strasse 3
W-8000 München 71 (DE)

**Beschreibung**

Die Erfindung betrifft eine Teleskop-Stahlabdeckung entsprechend dem Oberbegriff des Anspruches 1.

Eine Teleskop-Stahlabdeckung gemäß dem Oberbegriff des Anspruches 1 ist durch Fig.8 der DE-OS 18 03 448.5 bekannt. Der Abstreifer weist hierbei zwei nach innen gerichtete Haltevorsprünge gleichbleibender Stärke auf, mit denen er die beiden äußeren Stege der Trägerleiste hintergreift. Die Trägerleiste ist ebenso wie die Deckwand der Stahlabdeckung mit Ausnehmungen versehen, die zur Aufnahme von Verbindungselementen, beispielsweise Spannstiften, dienen.

Der Erfindung liegt die Aufgabe zugrunde, eine Teleskop-Stahlabdeckung entsprechend dem Oberbegriff des Anspruches 1 dahin weiterzuentwickeln, daß bei sehr einfacher Herstellung und Montage jeder Abstreifeinrichtung ein besonders zuverlässiger Sitz des Abstreifers gewährleistet ist.

Diese Aufgabe wird erfindungsgemäß durch die Merkmale des Anspruches 1 gelöst.

Zweckmäßige Ausgestaltungen der Erfindung sind Gegenstand der Unteransprüche.

Zwei Ausführungsbeispiele der Erfindung sind in der Zeichnung veranschaulicht. Es zeigen

Fig.1 eine Aufsicht auf eine erfindungsgemäße Abstreifeinrichtung,

Fig.2 einen Schnitt längs der Linie II - II der Fig.1,

Fig.3 einen Schnitt (entsprechend Fig.2) durch ein abgewandeltes Ausführungsbeispiel.

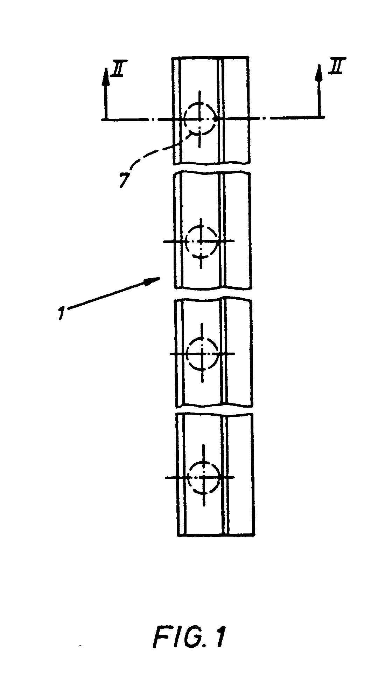

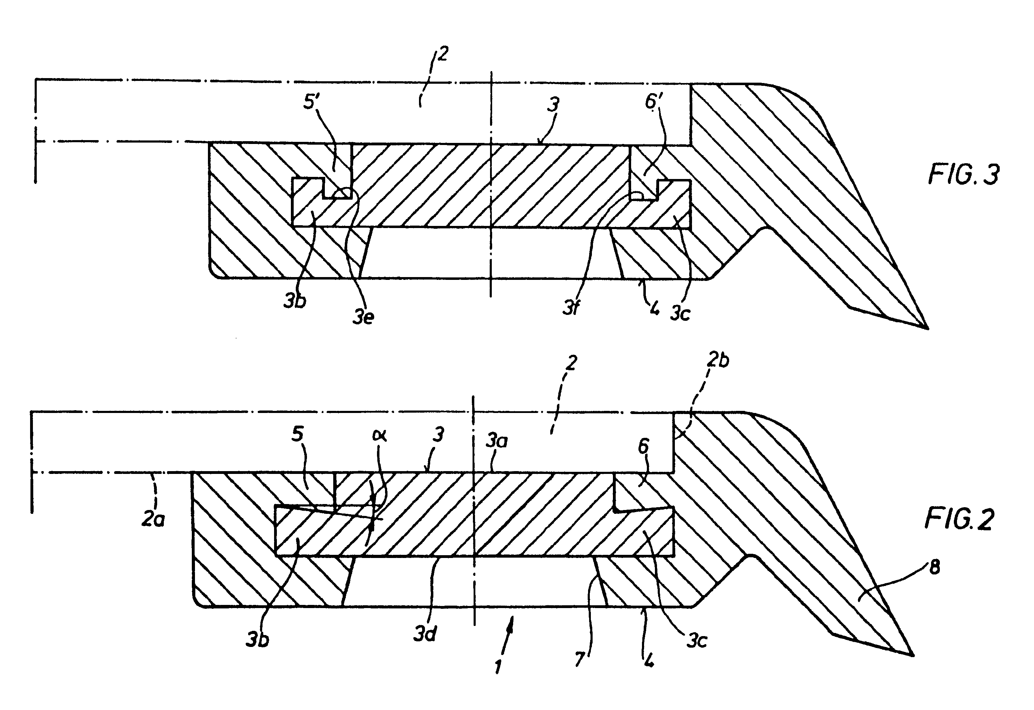

Die in den Fig.1 und 2 dargestelle Abstreifeinrichtung ist für eine Teleskop-Stahlabdeckung bestimmt, von der in Fig.2 lediglich die Deckwand 2 eines Abdeckkastens gestrichelt angedeutet ist.

Die Abstreifeinrichtung 1 enthält eine metallische Trägerleiste 3, die ein T-förmiges äußeres Querschnittsprofil aufweist und mit der Basisfläche 3a des T an der Unterseite 2a der Deckwand 2 des Abdeckkastens nahe der Vorderkante 2b dieser Deckwand anliegt.

Die Abstreifeinrichtung 1 enthält ferner einen aus elastischem Material bestehenden Abstreifer 4, der ein dem äußeren Querschnittsprofil der Trägerleiste 3 angepaßtes inneres Querschnittsprofil aufweist und mit zwei nach innen gerichteten Haltevorsprüngen 5, 6 die beiden äußeren Stege 3b, 3c der Trägerleiste 3 hintergreift.

Die Stärke der beiden Haltevorsprünge 5, 6 des Abstreifers 4 vergrößert sich bei dem in den Fig.1 und 2 dargestellten Ausführungsbeispiel kontinuierlich von außen nach innen, und zwar mit einem Winkel α, der zwischen 2 und 15°, vorzugsweise zwischen 3 und 8°, beispielsweise bei 5°, liegt.

Der an der Unterseite 3d der Trägerleiste 3 anliegende Bereich des Abstreifers 4 ist mit Ausnehmungen 7 versehen, die zur Herstellung der Verbindung zwischen der Trägerleiste 3 und dem Abdeckkasten 2 dienen.

Der Abstreifer 4 weist in seinem über die Vorderkante 2b der Deckwand 2 vorstehenden Bereich eine Abstreiflippe 8 auf, mit der er auf der Oberseite der Deckwand des nächstkleineren Abdeckkastens der Teleskop-Stahlabdeckung aufliegt.

Das Querschnittsprofil des Abstreifers 4 ist so bemessen, daß der Abstreifer 4 unter elastischer Verformung auf die Trägerleiste 3 aufziehbar ist und im aufgezogenen Zustand die Trägerleiste 3 formschlüssig und mit elastischem Druck umschließt.

Die Montage der Abstreifeinrichtung 1 geschieht folgendermaßen:

Es wird zunächst der Abstreifer 4 auf die Trägerleiste 3 aufgebracht. Dann wird die so hergestellte Abstreifeinrichtung 1 an der Deckwand 2 des Abdeckkastens befestigt, indem die Trägerleiste 3 mit der Deckwand 2 punktweise verschweißt wird. Die im Abstreifer 4 vorgesehenen Ausnehmungen 7 ermöglichen hierbei für die Schweißelektrode einen Zugang zur Unterseite 3d der metallischen Trägerleiste 3.

Bei Herstellung der Schweißverbindung zwischen der Trägerleiste 3 und der Deckwand 2 wird die Trägerleiste 3 an die Deckwand 2 herangezogen, wobei die Haltevorsprünge 5 und 6 des Abstreifers 4 zwischen den Stegen 3b, 3c der Trägerleiste 3 und der Deckwand 2 des Abdeckkastens eingeklemmt werden. Auf diese Weise ergibt sich ein besonders zuverlässiger Sitz des Abstreifers 4 an der Trägerleiste 3 und eine unbedingte Sicherheit gegen ein unbeabsichtigtes Lösen des Abstreifers 4 im Betrieb der Stahlabdeckung.

Bei dem in Fig.3 dargestellten Ausführungsbeispiel sind gleiche Teile mit denselben Bezugszeichen wie in den Fig.1 und 2 bezeichnet. Abweichend bei dieser Variante ist die Gestaltung der Haltevorsprünge 5', 6' des Abstreifers 4. Die Stärke dieser beiden Haltevorsprünge 5', 6' vergrößert sich hier stufenweise von außen nach innen. Die Stege 3b, 3c der Trägerleiste 3 sind mit entsprechenden Vertiefungen 3e, 3f versehen, in die das verbreiterte innere Ende der Haltevorsprünge 5', 6' eingreift.

Die Montage der Abstreifeinrichtung gemäß Fig.3 erfolgt in gleicher Weise wie bei der Ausführung gemäß den Fig.1 und 2. Auch hier ist nach Herstellung der Verbindung zwischen der Trägerleiste 3 und der Deckwand 2 ein besonders zuverlässiger Sitz des Abstreifers 4 an der Trägerleiste 3 gewährleistet.

Abweichend von dem in den Fig. 1 bis 3 dargestellten Ausführungsbeispiel kann die der Abstreiflippe 8 abgewandte rückwärtige Stirnfläche des Abstreifers 4 (d. h. in den Fig. 2 und 3 die linke Stirnfläche) eine Profilierung aufweisen, die beispielsweise wellen,- rippen- oder noppenförmig ausgebildete Vorsprünge aufweist. Diese Vorsprünge wirken als elastische Anschlagpuffer für den nächstkleineren Abdeckkasten, der am Ende seiner Auszugsbewegung mit einem über seine Deckwand nach oben vorstehenden Anschlag zur Anlage an der rückwärtigen Stirnfläche des Abstreifers 4 des nächstgrößeren Abdeckkastens kommt. Durch elastische Verformung dieser an der rückwärtigen Stirnfläche des Abstreifers ausgebildeten Vorsprünge erfolgt eine sehr erwünschte Pufferung und Dämpfung des Anschlagvorganges.

## Patentansprüche

1. Teleskop-Stahlabdeckung aus mehreren Abdeckkästen mit Deckwänden (2) und an letzteren vorgesehenen Abstreifeinrichtungen (1), wobei jede Abstreifeinrichtung ausgebildet ist mit

a) einer mit T-förmigem äußeren Querschnittsprofil versehenen metallischen Trägerleiste (3), die mit der Basisfläche (3a) des T an der Unterseite der Deckwand (2) eines Abdeckkastens nahe der Vorderkante (2b) dieser Deckwand anliegt und mit der Deckwand des Abdeckkastens verbindbar ist,

b) einem aus elastischem Material bestehenden Abstreifer (4), der ein dem äußeren Querschnittsprofil der Trägerleiste (3) angepaßtes inneres Querschnittsprofil aufweist und mit zwei nach innen gerichteten Haltevorsprüngen (5, 6 bzw. 5', 6') die beiden äußeren Stege (3b, 3c) der Trägerleiste (3) hintergreift,

gekennzeichnet durch folgende Merkmale:

c) die Stärke der beiden Haltevorsprünge (5, 6, 5', 6') des Abstreifers (4) vergrößert sich von außen nach innen, während sich die Stärke der Stege (3b, 3c) der Trägerleiste (3) von außen nach innen entsprechend verkleinert;

d) der an der Unterseite (3d) der Trägerleiste (3) anliegende Bereich des Abstreifers (4) ist mit Ausnehmungen (7) zur Herstellung der Verbindung zwischen Trägerleiste (3) und Adeckkasten versehen;

e) die Trägerleiste (3) ist mit dem Abdeckkasten über ein punktweises Verschweißen derart verbunden, daß bei Herstellung der Verbindung die Trägerleiste (3) an die Deckwand (2) des Abdeckkastens herangezogen wird und dabei die beiden Haltevorsprünge (5, 6 bzw. 5', 6') des Abstreifers (4) zwischen den Stegen (3b, 3c) der Trägerleiste (3) und dieser Deckwand (2) eingeklemmt werden.

2. Teleskop-Stahlabdeckung nach Anspruch 1, dadurch gekennzeichnet, daß sich die Stärke der beiden Haltevorsprünge (5, 6) des Abstreifers (4) kontinuierlich von außen nach innen vergrößert.

3. Teleskop-Stahlabdeckung nach Anspruch 2, dadurch gekennzeichnet, daß sich die Stärke der beiden Haltevorsprünge (5, 6) des Abstreifers (4) unter einem Winkel ($\alpha$) von 2 bis 15°, vorzugsweise von 3 bis 8°, von außen nach innen vergrößert.

4. Teleskop-Stahlabdeckung nach Anspruch 1, dadurch gekennzeichnet, daß sich die Stärke der beiden Haltevorsprünge (5', 6') des Abstreifers (4) stufenweise von außen nach innen vergrößert.

5. Teleskop-Stahlabdeckung nach Anspruch 1, gekennzeichnet durch eine solche Bemessung des inneren Querschnittsprofiles des Abstreifers (4), daß der Abstreifer (4) unter elastischer Verformung auf die Trägerleiste (3) aufziehbar ist und im aufgezogenen Zustand die Trägerleiste (3) formschlüssig und mit elastischem Druck umschließt.

6. Teleskop-Stahlabdeckung nach Anspruch 1, dadurch gekennzeichnet, daß die der Abstreiflippe (8) abgewandte rückwärtige Stirnfläche des Abstreifers (4) eine Profilierung aufweist, die vorzugsweise wellen-, rippen- oder noppenförmig ausgebildete Vorsprünge enthält, die als elastische Anschlagpuffer für den nächstkleineren Abdeckkasten wirken.

## Revendications

1. Chape télescopique d'acier se composant de plusieurs caissons de protection comportant des cloisons de couverture (2) et des dispositifs racleurs (1) prévus sur ces dernières, chaque dispositif racleur se composant

a) d'une baguette métallique de support (3) présentant un profil transversal extérieur en T et dont la surface de base (3a) du T est appliquée contre le côté inférieur de la cloison de couverture (2) d'un caisson de protection, à proximité du bord antérieur (2b) de cette cloison, cette baguette étant conçue pour être reliée à la cloison de couverture du caisson,

b) d'un racloir (4) en matière élastique qui présente un profil transversal intérieur complémentaire du profil transversal extérieur de la baguette de support (3) et qui s'agrippe au moyen de deux saillies de retenue (5, 6 ou 5', 6') orientées vers l'intérieur sur les deux ailes extérieures (3b, 3c) de la baguette de support (3),

caractérisée par les particularités suivantes:

c) l'épaisseur des deux saillies de retenue (5, 6, 5', 6') du racloir (4) augmente de l'extérieur vers l'intérieur, tandis que l'épaisseur des ailes (3b, 3c) de la baguette de support (3) diminue de manière correspondante de l'extérieur vers l'intérieur ;

d) la partie du racloir (4) qui est appliquée contre le côté inférieur (3d) de la baguette de support (3) comporte des évidements (7) destinés à la réalisation de la liaison entre la baguette de support (3) et le caisson de protection ;

e) la baguette de support (3) est reliée au caisson de protection par soudure par points, de manière que lors de la réalisation de la liaison, la baguette de support (3) soit amenée contre la cloison de couverture (2) du caisson de protection et donc que les deux saillies de retenue (5, 6 ou 5′, 6′) du racloir (4) soient coincées entre les ailes (3b, 3c) de la baguette de support (3) et cette cloison de couverture (2).

2. Chape télescopique d'acier selon la revendication 1, caractérisée en ce que l'épaisseur des deux saillies de retenue (5, 6) du racloir (4) augmente en continu de l'extérieur vers l'intérieur.

3. Chape télescopique d'acier selon la revendication 2, caractérisée en ce que l'épaisseur des deux saillies de retenue (5, 6) du racloir (4) augmente de l'extérieur vers l'intérieur sous un angle (α) de 2 à 15°, de préférence de 3 à 8°.

4. Chape télescopique d'acier selon la revendication 1, caractérisée en ce que l'épaisseur des deux saillies de retenue (5′, 6′) du racloir (4) augmente de l'extérieur vers l'intérieur par paliers.

5. Chape télescopique d'acier selon la revendication 1, caractérisée par un dimensionnement tel du profil transversal intérieur du racloir (4) que celui-ci se monte sur la baguette de support (3) en tirant sur lui et en provoquant sa déformation élastique et, après montage, ce racloir enveloppe la baguette de support (3) par complémentarité de formes et avec une pression élastique.

6. Chape télescopique d'acier selon la revendication 1, caractérisée en ce que la surface extrême arrière du racloir (4) tournée à l'opposé de la lèvre racleuse (8) présente un profilage comportant des saillies de préférence en ondulations, nervures ou boutons qui assument la fonction de tampon élastique de butée pour le caisson de protection ayant les dimensions inférieures suivantes.

## Claims

1. Telescopic steel cover consisting of several cover boxes with top walls (2) and with scraping arrangements (1) provided on the latter, in which each scraping arrangement is constructed with

a) a metal carrier strip (3) which is provided with a T-shaped outer profile, rests with the base surface (3a) of the T on the underside of the top wall (2) of a cover box near the front edge (2b) of this top wall and can be connected to the top wall of the cover box,

b) a scraper (4) which is made from elastic material, has an inner cross-sectional profile adapted to the outer cross-sectional profile of the carrier strip (3) and with two inwardly directed retaining projections (5, 6 or 5′, 6′) engages behind the two outer arms (3b, 3c) of the carrier strip (3),

characterised by the following features:

c) the thickness of the two retaining projections (5, 6, 5′, 6′) of the scraper (4) increases from the exterior towards the interior, whereas the thickness of the arms (3b, 3c) of the carrier strip (3) decreases correspondingly from the exterior towards the interior,

d) the region of the scraper (4) butting against the underside (3d) of the carrier strip (3) is provided with cut-outs (7) to make the connection between the carrier strip (3) and the cover box,

e) the carrier strip (3) can be connected to the cover box by spot welding in such a way that when the connection is made the carrier strip (3) is brought near to the top wall (2) of the cover box and the two retaining projections (5, 6 or 5′, 6′) of the scraper (4) are clamped between the arms (3b, 3c) of the carrier strip (3) and the top wall (2) of the cover box.

2. Telescopic steel cover as claimed in claim 1, characterised in that the thickness of the two retaining projections (5, 6) of the scraper (4) increases continuously from the exterior towards the interior.

3. Telescopic steel cover as claimed in claim 2, characterised in that the thickness of the two retaining projections (5, 6) of the scraper (4) increases from the exterior towards the interior at an angle (α) of 2 to 15°, preferably 3 to 8°.

4. Telescopic steel cover as claimed in claim 1, characterised in that the thickness of the two retaining projections (5′, 6′) of the scraper (4) increases in stages from the exterior towards the interior.

5. Telescopie steel cover as claimed in claim 1, characterised in that the inner cross-sectional profile of the scraper (4) is dimensioned in such a way that the scraper (4) can be elastically deformed and drawn up onto the carrier strip (3) and in the drawn-up state surrounds the carrier strip (3) so as to lock positively and with elastic pressure.

6. Telescopic steel cover as claimed in claim 1, characterised in that the rear end face of the scraper (4) facing away from the scraping lip (8) is profiled, preferably with projections in the form of waves, ribs or knobs which act as elastic bumpers for the next smaller cover box.

EP 0 267 248 B1

FIG. 1

5

FIG.3

FIG.2

EP 0 267 248 B1